(19) Europäisches Patentamt
European Patent Office
Office européen des brevets

(11) **EP 2 191 731 B1**

(12) **EUROPEAN PATENT SPECIFICATION**

(45) Date of publication and mention
of the grant of the patent:
**07.09.2011 Bulletin 2011/36**

(21) Application number: **08170029.6**

(22) Date of filing: **26.11.2008**

(51) Int Cl.:
*A23J 1/00* (2006.01)   *A23J 1/16* (2006.01)
*A23J 3/14* (2006.01)   *A23L 1/305* (2006.01)
*A23L 2/66* (2006.01)   *C12C 5/02* (2006.01)
*C12G 3/02* (2006.01)

(54) **Enhanced beer foaming**

Verbessertes Schäumen von Bier

Moussage amélioré de la bière

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(43) Date of publication of application:
**02.06.2010 Bulletin 2010/22**

(73) Proprietor: **Coöperatie AVEBE U.A.
9641 GK Veendam (NL)**

(72) Inventors:
• **Klijnstra, Gertjan**
**9726 EG Groningen (NL)**
• **Giuseppin, Marco Luigi Federico**
**9461 JB Gieten (NL)**

(74) Representative: **Hatzmann, Martin et al
Vereenigde
Johan de Wittlaan 7
2517 JR Den Haag (NL)**

(56) References cited:
**EP-A- 1 876 228    WO-A-2008/069650**

**Description**

The invention is directed to a process for preparing beer with enhanced foaming properties, to beer , and to the use of a native potato protein isolate as foam stabilising agent.

Foaming of beer is an important quality for appearance, taste, and flavour impression of the beer. Brewers are particularly interested in optimising foam quality, because it has a direct impact upon the purchasing decision of customers. Beer foam quality is defined by a combination of its stability, quantity, lacing (adhesion or cling), whiteness, "creaminess", and strength (Bamforth, J. Inst. Brew. 1985, 91, 370-383). Of these characteristics beer foam stability is the most important, for if the foam is not stable, the other characteristics are likely to be of little consequence.

In general, beer foam is formed by the interaction of specific proteins and surfactants released from the raw materials and the yeasts during the fermentation and partial autolysis. These components form, stabilise and prevent coalescence and collapse of the air bubbles in the foam. Many, mostly hydrophobic, proteins that play a role in beer foam formation are derived from barley (Yokoi et al., J. Am. Soc. Brew. Chem. 1994, 52(3), 125-126) or yeast derived mannoproteins are responsible for the formation and stability of beer foam (see e.g. EP-A-0 790 316).

Beer is a supersaturated solution of gases. When beer is poured (from bottle or tap) the gas bubbles break out of solution and rise to the top of the glass in an effect known as "tracing". The other important visual effect created by the gas is fro foam adhering to the side of the glass which is called "cling" or "lacing". Ronteltap et al. (Tech. Q. Mater Brew. Assoc. Am. 1991, 28, 25-32) provided an excellent investigation into the physics of beer and concluded that foam characteristics are determined by the progress of four key processes: bubble formation, drainage, coalescence, and disproportionation. The most important mechanism for bubble formation is nucleation, in which bubbles form in the supersaturated beer at nucleation sites such as microscratches in the side of the glass or from etched sites provided. Control of the angle of dispense and lower dynamic beer surface tension lead to smaller bubbles with a homeodisperse size distribution, which results in the desirable "creamy" foam characteristic. After bubble formation, drainage of beer from the foam by gravity weakens the bubble film, leading to bubble collapse. Beer components that mechanically strengthen the bubble film, such as hydrophobic interactions and increased interfacial viscosity (an inherent temperature component), both counteract drainage. Coalescence of bubble results from the rupture of the film between them to make larger bubbles that are less visually desirable and again leads to foam collapse. Other components, most notably lipids, disrupt the bubble film to collapse the foam by increasing coalescence. Finally, disproportionation is the process by which the gas from smaller bubbles with higher Laplace pressure diffuses into larger bubbles with lower Laplace pressure. Thus, smaller bubbles diappear and larger bubbles become even larger, resulting in bigger bubbles that are less attractive. The rate of disproportionation is increased by the inclusion of detergents from dirty glassware or faulty cleaning-in-place procedures. Because nitrogen is less soluble in beer than carbon dioxide, disproportionation is less in beers using a mixture of these gases, resulting in greater foam stability.

In an attempt to improve the beer foaming stability, many researchers have focused on foam-positive species, in particular, beer proteins, which have been implicated in the production and stabilisation of foam. He et al. (J. Am. Soc. Brew. Chem. 2006, 64, 33-38) showed that proteinase activity limits the stability of foam by the breakdown of foam forming proteins. The proteinsases such as proteinase A is released from yeasts during the brewing process. Especially in unpasteurised beer the proteinase activity limits the foam stability.

EP 1876228A1 discloses a method for producing a foaming alcoholic beverage such as beer, wherein a germinated material such as potato is used as a foam quality improving substance.

In spite of the vast research that has been performed in the area of beer foam quality, there remains a strong need in the art for improved beer foam quality and in particular for improved beer foam stability. It would be desirable to provide traditional beers having an alcohol content of 2.5 % or more with a longer stand time before consumption.

Moreover, low or non-alcoholic beer lack or have only limited sources of foam forming and foam stabilising components due to shorter fermentation or less ingredients. In the production of such beer the sources of effective foam forming and stabilising proteins are very small or even absent. In most cases low amounts of yeasts, yeast derived proteins and low amounts of barley are used. As a result, the proteins that are released from the yeast in traditional beers, such as manno proteins, which are responsible for foam formation and stability, are largely absent. Also, the amounts of wort, malt, and hop are often reduced. Therefore, many low or non-alcoholic beers have to be improved in terms of foam stability and foam formation. In addition, some or a considerable part of foam forming proteins may be degraded by the action of proteinases as shown by He et al. (J. Am. Soc. Brew. Chem. 2006, 64, 33-38).

It is an object of the invention to provide a process for preparing beer with excellent foam quality, and in particular excellent foam stability.

A further object of the invention is to provide a low or non-alcoholic beer with good foam quality, and in particular good foam formation and foam stability.

It was found that one or more of these objects can be met by providing a beer with a specific native potato protein isolate.

Thus, in a first aspect the invention is directed to a process for preparing beer with enhanced foaming properties comprising adding a native potato protein isolate to said beer, wherein said native potato protein isolate has a protein content of 90 % or more based on dry matter as determined from the weight of total Kjeldahl nitrogen multiplied by 6.25.

The inventors found that this process yields beer that has very good foam formation and excellent foam stability. Advantageously, the native potato protein isolate can be added to the beer after the beer brewing process and before the beer is pasteurised and bottled or casked for consumption. Accordingly, the process does not disturb or interfere with the traditional beer brewing process. However, it is also possible to add the native potato protein isolate already during the brewing process.

The native potato protein isolate is very soluble at the relatively low pH of beer, which is normally in the range of 3.2-4.5. Furthermore, it was found that the isolate is stable under the beer conditions for a considerable time related to the shelf-life of beer. Moreover, the foam stabilising native potato protein isolate of the invention is completely safe for use in food as the isolate is derived from potatoes and mainly consists of proteins. In addition, the low dosage required avoids any undesirable off-taste or off-flavour.

The term "native potato protein" as used in this application is meant to refer to the potato protein without any significant physical or (bio)chemical modification or inactivation, in particular denaturation.

The term "beer" as used in this application is meant to refer to a beverage, preferably a fermented or yeast contacted beverage, made from cereal grains, preferably barley, wheat, triticale, oat, rye, maize, sorghum, millet or rice, or milled cereals or malt produced from such cereal grains. The term beer is meant to include for example ale, strong ale, mid ale, bitter ale, pale ale, sour ale, stout, porter, lager, malt liquor, barley wine, happoushu, bock, doppelbock, Kölsch beer, Münchener beer, Dortmunder beer, Dusseldorfer alt beer, Pilsener beer, marzen beer, German weizenbier, Berliner weisse, Saisons beer, abbey beer, Trappist beer, geuze, lambic beer, fruit beer, Belgian white beer, high alcohol beer, low alcohol beer, non-alcoholic beer, low calorie beer, light beer, non-alcoholic malt beverages and the like.

Native potato proteins can tentatively be divided into the following three classes: (i) the patatin family, highly homologous acidic 43 kDa glycoproteins (40-50 wt.% of the potato proteins), (ii) basic 5-25 kDa protease inhibitors (30-40 wt.% of the potato proteins) and (iii) other proteins mostly high molecular weight proteins (10-20 wt.% of the potato proteins) (Pots et al., J. Sci. Food. Agric. 1999, 79, 1557-1564).

Patatin is a family of glycoproteins that have lipid acyl hydrolase and transferase activities and accounts for up to 40 wt.% of the total soluble protein in potato tubers. The patatin isolate of native potato protein comprises oxidases and lipase.

Protease inhibitors can be divided into different groups based on their molecular weight. The different groups of protease inhibitors are identified as protease inhibitor I (molecular weight of about 39 kDa), carboxypeptidase inhibitor (molecular weight of about 4 100 Da), protease inhibitors IIa and IIb (molecular weight of about 20.7 kDa), and protease inhibitor A5 (molecular weight of about 26 kDa). The ratio of these different groups of protease inhibitors in the total potato protein depends on the potato variety.

Suitably, the native potato protein isolate can have a protein content of 90 % or more based on dry matter (weight of total Kjeldahl nitrogen multiplied by 6.25), preferably 92 % or more, more preferably 95 % or more. The potato protein isolate can have a protein content of 85 % or more based on the total weight of the protein isolate (weight of total Kjeldahl nitrogen multiplied by 6.25).

Existing methods for isolating potato proteins and potato protein fractions include fractionation, ion exchange, gel permeation, ultrafiltration, affinity and mixed-mode chromatography, and fractionation by heat coagulation. Conventional heat coagulation, however, yields a potato protein isolate having a protein content of about 70-80 % based on dry matter.

The native potato protein isolates used in the invention may be isolated according to any known process which yields a potato protein isolate with sufficiently high protein content. An example of a suitable isolation method is described in WO-A-2008/069650. Herein a selective, mild, and efficient process for the isolation of native potato protein isolates and the different patatin and protease inhibitor fractions therein is described.

According to the process of WO-A-2008/069650, potato fruit juice (the undiluted juice from potato tuber) is preferably first pre-treated by a divalent metal cation at a pH of 7-9 to flocculate undesired material. The removed undesired material can typically include negatively charged polymers, pectins, glycoalkaloids, and micro-organisms from the potato fruit juice. In particular, the removal of pectins and glycoalkaloids is advantageous, since these compounds adhere to the potato proteins and may cause flocculation. These compounds thus lead to an unstable protein isolate. Moreover, the presence of glycolalkaloids may give rise to an unpleasant off-taste. After flocculation, the flocks are separated from the potato fruit juice by centrifugation. The supernatant is subjected to mixed mode expanded bed chromatography operated at a pH of less than 11 and a temperature of 5-35 °C using an adsorbent which binds native potato protein. Finally, the native potato protein is eluted from the adsorbent with a suitable eluent. This process yields highly pure native potato protein isolate with a minimum of denatured protein and stable solubility. The native potato protein isolate can have an isoelectric point above 4.8, a molecular weight of more than 5 kDa and a glycoalkaloid concentration of less than 150 ppm.

If mixed mode adsorbentia are used, the native potato proteins can be fractionated to both isoelectric point and molecular weight. This allows separating the patatin and protease inhibitor fractions. The mixed mode adsorbentia can be used in two modes. The first mode is selective elution, which comes down to binding of essentially all of the potato protein and subsequently eluting a first desired potato protein fraction with an appropriate buffer and eluting a second desired potato protein fraction with another appropriate buffer. The second mode is selective adsorption, which comes down to binding of a first desired potato protein fraction on one column at an elevated pH, and adjusting the effluent to a lower pH so that a second desired potato protein fraction can bind on a second column. The patatin can be eluted at a pH of 5.78-8.7, preferably at a pH of 5.8-6.2. Protease inhibitors can be eluted at a pH of 5.8-12.0, preferably at a pH of 6.0-9.5. For the invention it is preferred to use a native potato protease inhibitor fraction.

Preferably, the native potato protein isolate comprises native potato protease inhibitor. In an embodiment the native potato protein isolate is a native potato protease inhibitor isolate. The protease inhibitor fraction mainly consists of low molecular weight acid soluble proteins, which accordingly are very favourable for application in beer. Without wishing to be bound by theory, it is believed that the protease inhibitor fractions are able to stabilise proteins that are responsible for the formation of foam during the brewing process and before pasteurisation. The protease inhibitors as such can also contribute to foam formation. Advantageously, protease inhibitor fractions can further be used as satiety enhancing components. The protease inhibitor II, PI-2, which is the component that is responsible for satiety enhancement, is stable at pasteurisation conditions used in beer production. The inventors for instance found that the activity of protease inhibitor II is stable for more than 6 months at pH 3.0-4.6 after pasteurisation at 60-80 °C.

According to a preferred embodiment, the native potato protease inhibitor isolate is acidified to a pH value of 4.2-4.7, preferably to a pH of about 4.5. This can for instance be accomplished using acetic acid. At this pH residual high molecular weight compounds such as proteins, patatin, and polyphenols precipitate. The precipitated compounds can be removed by conventional centrifugation in a separator. The supernatant can be set at a pH value of 3-4, such as at a pH of about 3.5. By removing the high molecular weight components, such as patatin and polyphenols, less or no precipitate is formed at the relatively low pH of the beer. This pH of the beer usually lies in the range of pH 3.2-4.5, more in particular in the range of pH 4-4.5.

Since glycoalkaloids may give rise to an undesirable off-taste it is preferred to decrease the glycoalkaloid content as much as possible. Therefore, the eluted native potato protein isolate can optionally be treated with one or more adsorbents, such as activated carbon or a layered silicate. Such treatments have been described in WO-A-2008/069651 or WO-A-2008/056977. The one or more adsorbents can simply be added to the native potato protein isolate and, after a period effective for the adsorbent to adsorb glycoalkaloids, be removed again. In another embodiment, the adsorbent is used as a column material over which the native potato protein isolate is passed as an eluent. During elution, glycoalkaloids will adsorb to the adsorbent and at the bottom of the column the collected eluate is an aqueous solution from which glycoalkaloids are essentially completely removed. Suitable commercially available types of activated carbon include Norit® GAC 1240 Plus, Norit® C-Gran, Norit® CASPF, Norit® SX 1G, Norit® CGSP, Chemviron® Carbon pellets, Fluka® 05105 Active Charcoal. Suitable commercially available layered silicates include BleachAid™, Tonsil® supreme 112FF, Tonsil® Optimum 210FF, Standard 310FF, Standard 3141FF, Microsorb® 25/50 LSC-7, Engelhard Grade F-52, Engelhard Grade F-24, gumbrin, AccoFloc® 352, AccuGel™ F, Akajo, Altonit SF, Ankerpoort colclay A90, Aquagel®, Aquagel Gold SEAL®, asama, askangel, baroco, ben-gel 11, yellow stone, western bond, natural gel, hydrocol HSUF, kunigel V2, mineral colloid 101, mineral colloid 103, polargel, Bentonite magma, tixoton, and Volclay® bentonite BC.

The native potato protein isolate may be concentrated by ultrafiltration. This may reduce the amount of undesired compounds, such as glycoalkaloids. Suitably, the ultrafiltration membrane has a molecular cut-off of 100-300 kDa. Patatin isolates can be ultrafiltrated at a pH value of 4.0-6.0, preferably at a pH value of 4.5-5.4. For protease inhibitors the ultrafiltration is typically carried out at a pH of 3-7, preferably 3.2-4.5. Apart from ultrafiltration other concentration methods can be applied such as evaporation, freeze concentration, or isoelectric precipitation using carbon dioxide. The resulting concentrate can be dried in a spray tower to an off-white powder. The dried concentrate typically has a moisture content of less than 8 wt.% or less, preferably 6 wt.% or less, more preferably 5 wt.% or less, in particular about 4 wt.%. The powder finally obtained can be easily solubilised at a pH of 3.5 with a solubility of more than 250 g dry matter per litre.

Typically, this process yields a potato protein isolate having a protein content of 90 % based on dry matter (weight of total Kjeldahl nitrogen multiplied by 6.25). The material typically comprises 3-7 wt.% moisture.

Preferably, the beer has an alcohol percentage of 5 vol.% or less, more preferably of 2.5 vol.% or less, such as 2.5-0 vol.%.

The native potato protein isolate can be added to the beer in a very low amount and still have a considerable stabilising effect on the foam formed. A minimum amount of 0.005 wt.% of dry matter native potato protein isolate based on total weight of the beer, such as 0.01 wt.%, can be sufficient. Normally, the amount of added native potato protein isolate does not exceed 0.04 wt.% of dry matter native potato protein isolate based on total weight of the beer, such as 0.01 wt.%. The low dosage of the native potato protein isolate has essentially no effect on taste, flavour, or cloudiness of the beverage even after prolonged storage.

In a further aspect, the invention is directed to a beer comprising a native potato protein isolate as described herein, and preferably having an alcohol percentage of 5 vol.% or less, more preferably of 2.5 vol.% or less, such as 2.5-0 vol.%. The beer can suitably have a pH in the range of 2.8-4.2, preferably in the range of 3-4.

In yet a further aspect, the invention is directed to the use of a native potato protein isolate, preferably a native potato protease inhibitor isolate, as foam stabilising agent in beer.

The invention will now be further illustrated by means of the following Examples.

Example 1: Method to produce acid clear protease inhibitor isolate

The protease inhibitor isolate can be eluted using the expanded bed adsorption (EBA) technology described in WO-A-2008/069650 or using methods that create essential the same fractions and purity.

The eluates with a pH of 10.5-11.0 were acidified with acetic acid to a pH value between 4.2 and 4.7. At this pH residual high molecular weight compounds such as proteins, patatin and polyphenols are precipitated and removed by centrifugation in a separator at 8500 rpm. The supernatant was set at a pH of 3.5, and was then concentrated by ultrafiltration using a 5 kDa polyether polysulphone ultrafiltration membrane. The resulting concentrate was dried in a spray tower at 150 °C inlet temperature and 75°C outlet temperature to a white powder with a moisture content of 4 wt. % based on total weight of the concentrate.

Example 2: Foam formation and stability in a low-alcohol beer with native potato protease inhibitor isolate

This example shows the stabilising effect of acid clear protease inhibitor fraction to stabilise foam in beer for at least 600 seconds.

A commercial low alcohol beer, Amstel Malt beer (0.1 vol.% alcohol), was degassed. The $CO_2$ was released by stirring in a glass beaker for 2 hours with a stir bar. A scaled volume cylinder was rinsed with cold demi water. The cylinder was filled with 75 ml of Amstel Malt beer alone as a reference, and with Amstel Malt beer containing different amounts of the native potato protease inhibitor isolate obtained as described in Example 1. The glass frit was placed in the cylinder. Compressed air with a 0.1 bar overpressure was led through the glass frit until the foam reached a value of 250 ml. The filter was removed and a stopwatch was started. During 15 minutes the height of the foam was measured every minute. The height of the foam was defined as the level where the foam is completely opaque. The changes in structure of the foam, bubble size are measured as a function of time. The volume fraction of the foam was calculated as a function of time using the following equation.

$$\phi(t) = \frac{h_{tot}(t) - h_0}{h_{tot}(t)},$$

wherein $h_{tot}(t)$ is the height of liquid plus foam at time t, and $h_0$ is the height of the liquid before foaming. Table 1 shows the different concentrations of native potato protease inhibitor isolate in the Amstel Malt beer.

Table 1: list of different protein concentrations used (the percentages in the Table refer to weight percentages based on total weight)

|  | Reference | S1 (0.01 %) | S2 (0.02 %) | S3 (0.03 %) |
| --- | --- | --- | --- | --- |
| Amstel Malt beer | 100 | 99.95 | 99.90 | 99.85 |
| PI solution 20 % | 0 | 0.05 | 0.10 | 0.15 |

*Volume fraction*

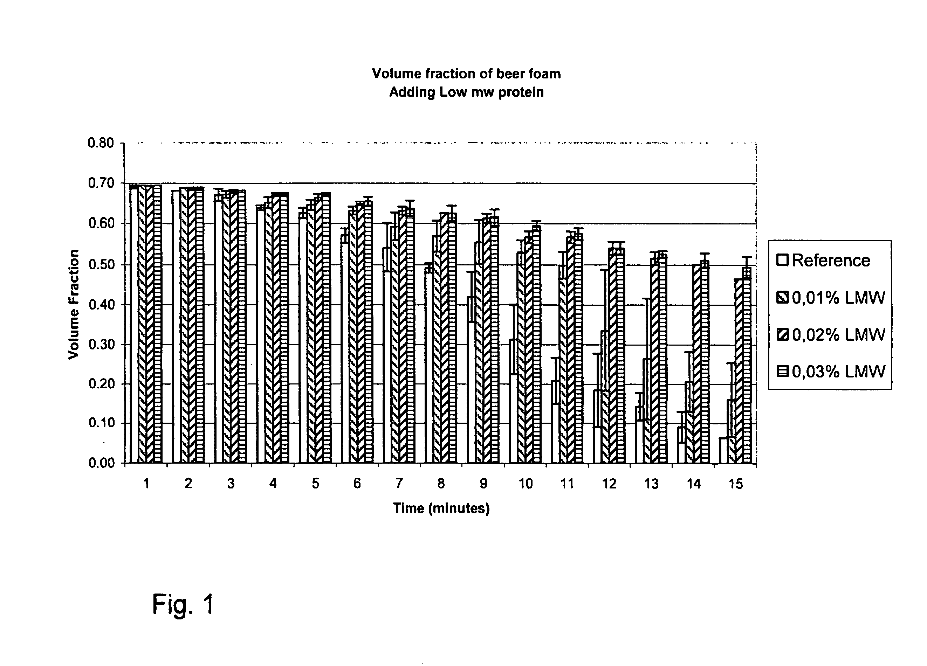

Figure 1 shows the volume fraction of the foam as function of the time. After four minutes the foam volume of the reference starts to drop while the foam volume of the samples having a native potato protease inhibitor isolate dosage of > 0.01 % remains almost constant.

*Foam structure*

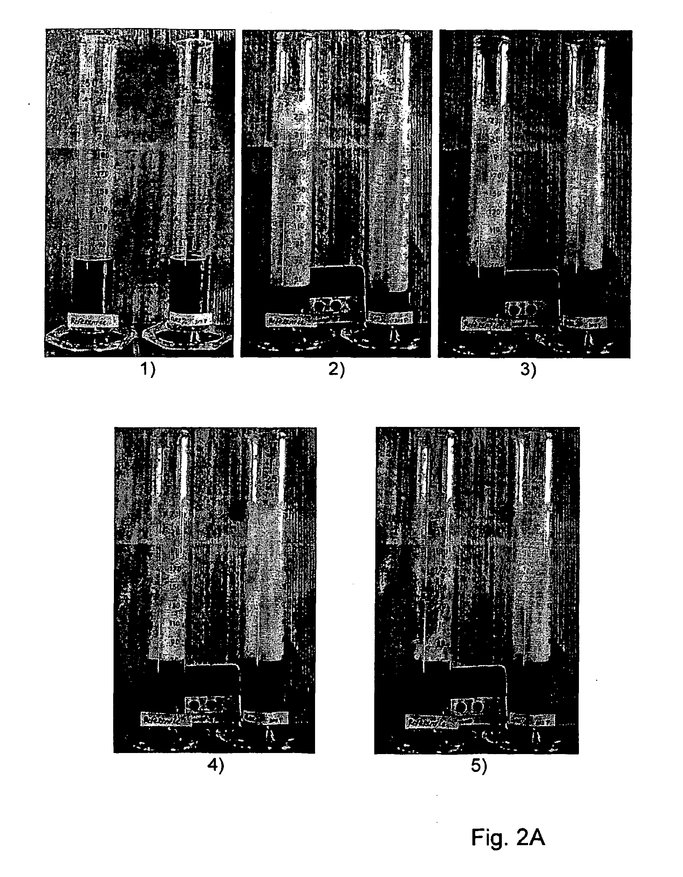

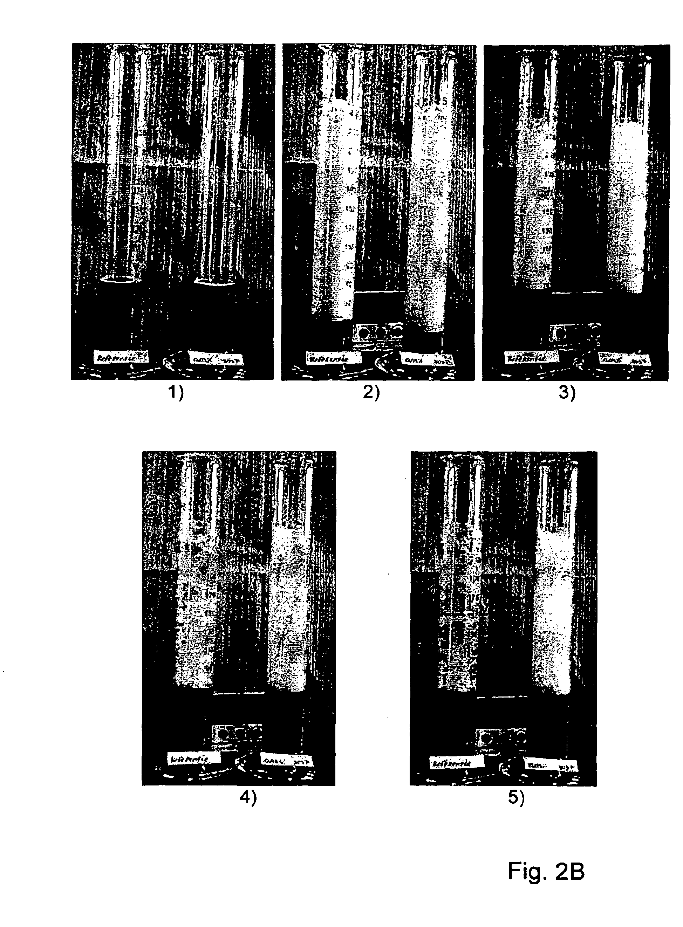

When acid clear potato protease inhibitor fraction is added the beer stays clear and no haze is noticed. When looking at the foam of the beer, a difference in foam structure is observed. This difference in foam structure starts to appear after two minutes. After five minutes the foam bubbles of the reference are significantly bigger than of sample 2 and 3 (S2 and S3). The difference between the reference and the samples with acid clear protease inhibitor fraction added is getting bigger in time, see Figure 2 (1: starting point, 2: directly after foaming, 3: after 5 minutes, 4: after 10 minutes, 5: after 15 minutes; Figure 2A: comparison of foam volume between Amstel malt beer without (left) and with (right) 0.02 % protease inhibitor added; Figure 2B comparison of foam volume between Amstel malt beer without (left) and with (right) 0.03 % protease inhibitor added).

Comparative Example: Foam formation and stability in a low-alcohol beer with native potato protease inhibitor isolate

A dose response curve is made with the acid clear protease inhibitor fraction and with Hyfoama DSN from Kerry Ingredients as foam stabiliser. In Table 2 an overview is provided of the protein concentrations that are used.

Table 2: list of different Hyfoama concentrations used

|  | Reference | 0.01% Hyfoama | 0.02% Hyfoama | 0.03% Hyfoama |
| --- | --- | --- | --- | --- |
| Amstel Malt beer | 100 | 99.95 | 99.90 | 99.85 |
| Hyfoama solution 20 % | 0 | 0.05 | 0.10 | 0.15 |

*Volume fraction*

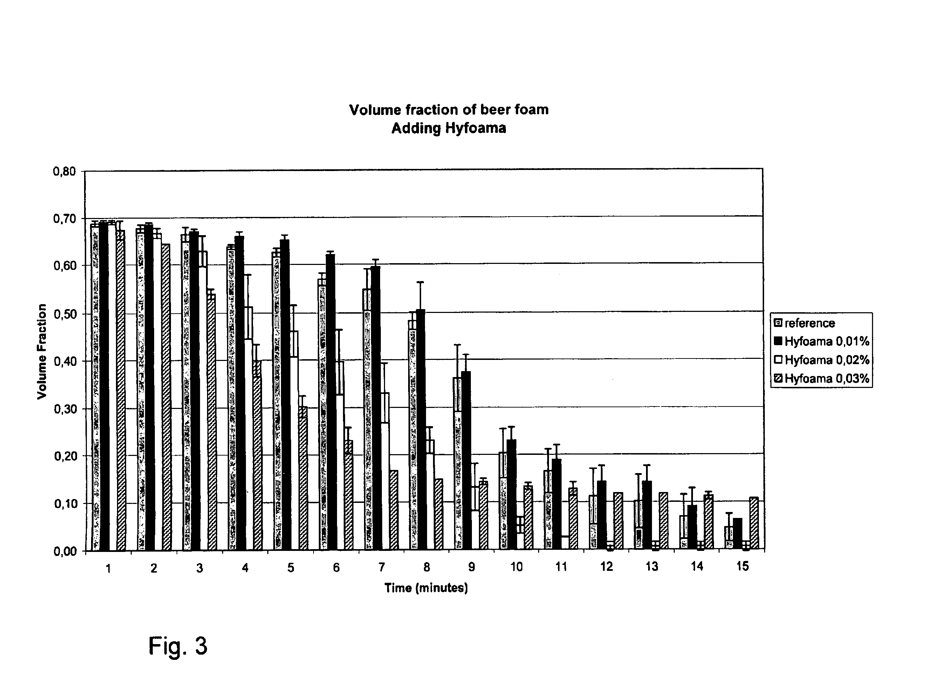

Figure 3 shows the volume fraction of the foam as a function of time. After four minutes the foam volume of the reference starts to drop. The sample having a Hyfoama DSN dosage of 0.01 % has considerable more stable foam than the reference sample, but nevertheless drops starts to drop after 6 minutes.

*Foam structure*

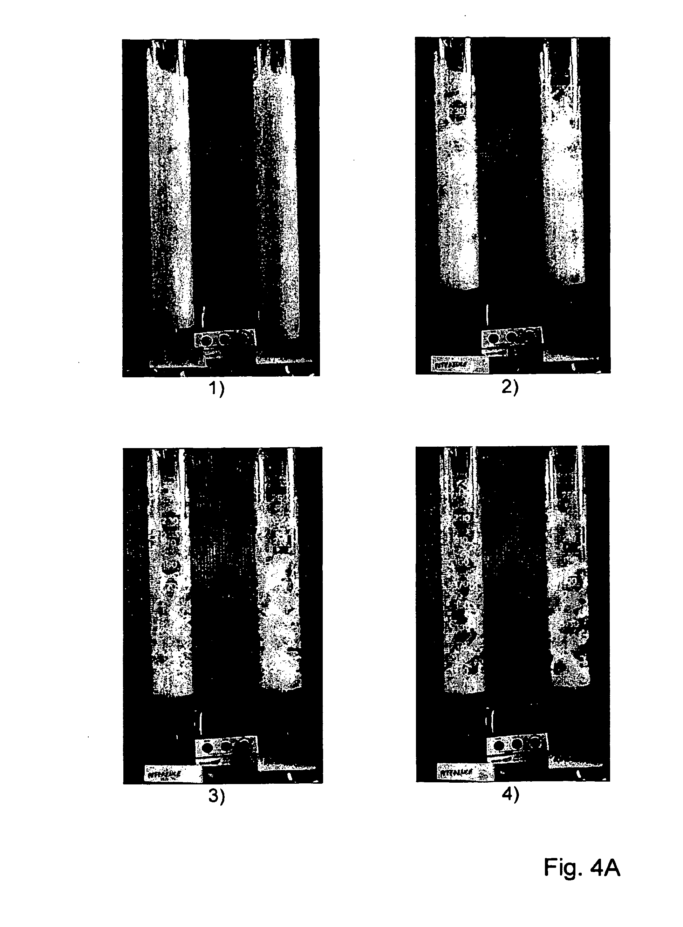

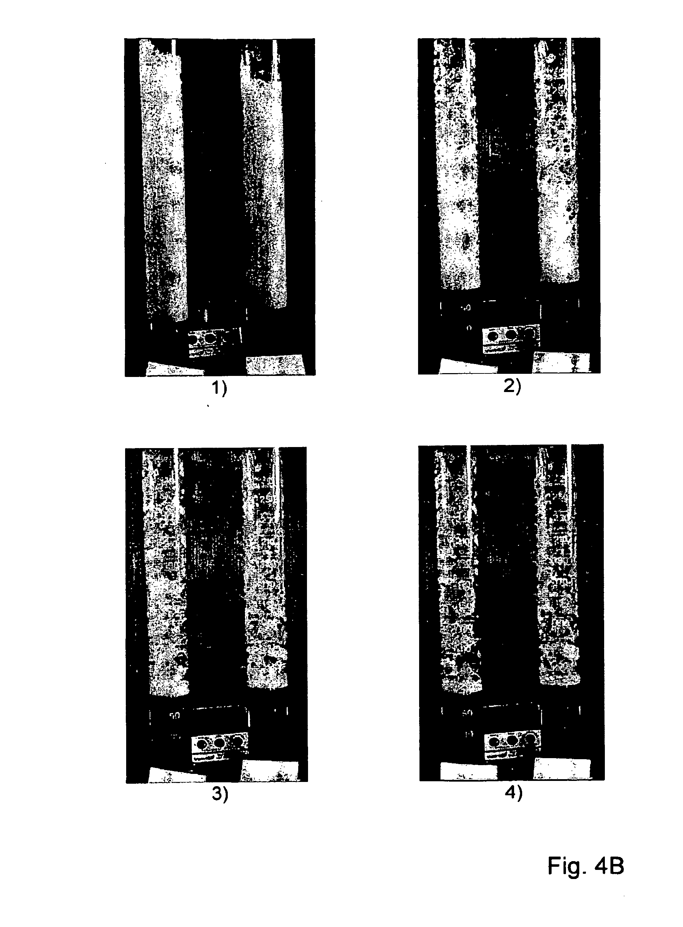

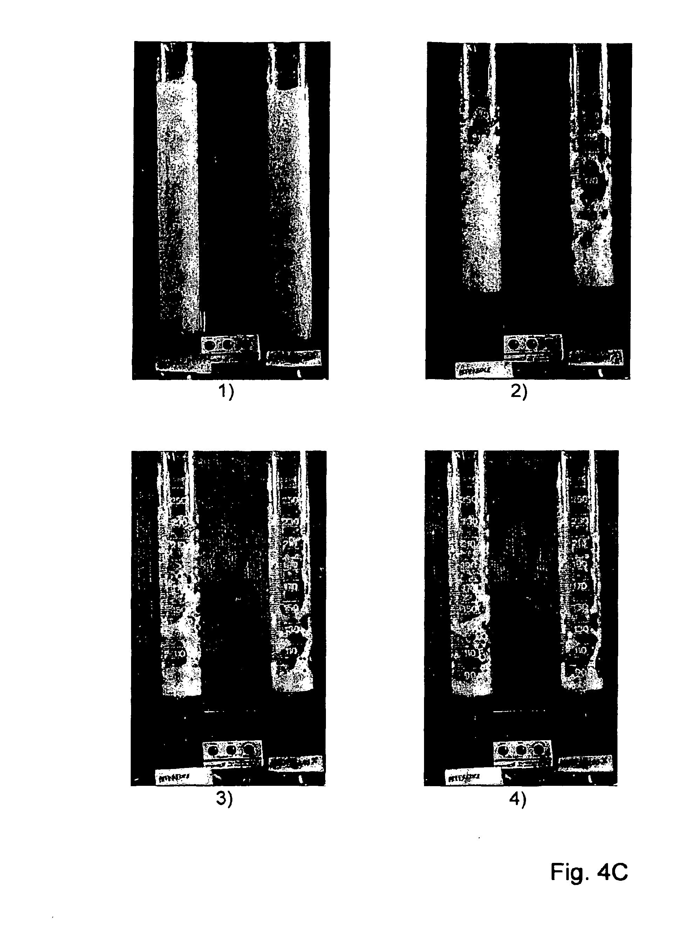

When Hyfoama was added to the beer haze was noticed already at concentrations of 0.01 %. Looking at the foam structure a fine bubble structure was observed when Hyfoama was added. Although bubbles of the foam had a fine structure, the stability was poor. The foam started collapsing after three minutes. In very low concentrations Hyfoama tends to have some stability effect. However, the difference with the reference was not significant. The difference between the reference and the samples with acid clear protease inhibitor fraction added was getting bigger as a function of time, see Figure 4 (1: directly after foaming, 2: after 5 minutes, 3: after 10 minutes, 4: after 15 minutes; Figure 4A: comparison of foam volume between Amstel malt beer without (left) and with (right) 0.01 % Hyfoama DSN added; Figure 4B: comparison of foam volume between Amstel malt beer without (left) and with (right) 0.02 % Hyfoama DSN added; Figure 4C: comparison of foam volume between Amstel malt beer without (left) and with (right) 0.03 % Hyfoama DSN added).

**Claims**

1. Process for preparing beer with enhanced foaming properties comprising adding a native potato protein isolate to said beer, wherein said native potato protein isolate has a protein content of 90 % or more based on dry matter as determined from the weight of total Kjeldahl nitrogen multiplied by 6.25.

2. Process according to claim 1, wherein said native potato protein isolate has a protein content of 92 % or more based on dry matter, preferably 95 % or more.

3. Process according to claim 1 or 2, wherein said native potato protein isolate comprises native potato protease inhibitor.

4. Process according to any one of claims 1-3, wherein said beer has an alcohol percentage of 5 vol.% or less, more preferably an alcohol percentage of 2.5 vol.% or less.

5. Process according to any one of claims 1-4, wherein said native potato protein isolate is added in an amount of 0.005-0.04 wt.% of dry matter native potato protein isolate based on total weight of the beer, preferably in an amount of 0.01 and 0.02 wt.%.

**6.** Process according to any one of claims 1-5, wherein said native potato protein isolate is obtained by a process comprising

- subjecting potato fruit juice to a flocculation by a divalent metal cation at a pH of 7-9;
- centrifuging the flocculated potato fruit juice, thereby forming a supernatant;
- subjecting the supernatant to a mixed mode adsorption chromatography operated at a pH of less than 11 and a temperature of 5-35 °C using an adsorbent capable of binding potato protein, thereby adsorbing the native potato protein to the adsorbent; and
- eluting at least one native potato protein isolate from the adsorbent with an eluent.

**7.** Process according to claim 6, wherein said eluting is followed by

- precipitating high molecular weight compounds by acidifying to a pH value of 4.2-4.7; and
- removing the precipitates by centrifuging in a separator.

**8.** Process according to claim 7, wherein the pH of the supernatant is set at a value of 3-4, preferably a pH of about 3.5.

**9.** Process according to any one of claims 6-8, wherein said native potato protein isolate is concentrated by ultrafiltration, optionally before or after said precipitating, such as ultrafiltration using a membrane with a molecular cut-off of 100-300 kDa.

**10.** Process according to any one of claims 6-9, wherein said native potato protein isolate is treated with an activated carbon and/or a layered silicate adsorbent to remove glycoalkaloids.

**11.** Process according to any one of claims 6-10, wherein said concentrated native potato protein isolate is dried to a moisture content of 8 wt.% or less, preferably 6 wt.% or less, more preferably 5 wt.% or less.

**12.** Beer comprising a native potato protein isolate as defined in any one of the preceding claims, and preferably having an alcohol percentage of 5 vol.% or less, more preferably of 2.5 vol.% or less.

**13.** Beer according to claim 12, having a pH in the range of 2.8-4.5, preferably in the range of 4-4.5.

**14.** Use of a native potato protein isolate, preferably a native potato protease inhibitor isolate, as foam stabilising agent in beer.

**Patentansprüche**

**1.** Verfahren zur Herstellung von Bier mit verbesserten Schäumungseigenschaften, bei dem dem Bier ein natives Kartoffelproteinisolat zugesetzt wird, wobei das native Kartoffelproteinisolat einen Proteingehalt von 90% oder mehr, bezogen auf trockenes Material, aufweist, wie bestimmt aus dem Gewicht des gesamten Kjeldahl-Stickstoffs multipliziert mit 6,25.

**2.** Verfahren nach Anspruch 1, bei dem das native Kartoffelproteinisolat einen Proteingehalt von 92% oder mehr, bezogen auf trockenes Material, aufweist, vorzugsweise 95% oder mehr.

**3.** Verfahren nach Anspruch 1 oder 2, bei dem das native Kartoffelproteinisolat nativen Kartoffelproteaseinhibitor umfasst.

**4.** Verfahren nach einem der Ansprüche 1 bis 3, bei dem das Bier einen Alkoholgehalt von 5 Vol.-% oder weniger aufweist, bevorzugter einen Alkoholgehalt von 2,5 Vol.-% oder weniger.

**5.** Verfahren nach einem der Ansprüche 1 bis 4, bei dem das native Kartoffelproteinisolat in einer Menge von 0,005 bis 0,04 Gew.-% des trockenen Materials des nativen Kartoffelproteinisolats zugesetzt wird, bezogen auf das Gesamtgewicht des Biers, vorzugsweise in einer Menge von 0,01 und 0,02 Gew.-%.

**6.** Verfahren nach einem der Ansprüche 1 bis 5, bei dem das native Kartoffelproteinisolat durch ein Verfahren erhalten wird, bei dem

Kartoffelfruchtsaft einer Ausflockung mittels eines zweiwertigen Metallkations bei einem pH-Wert von 7 bis 9 unterzogen wird,

der ausgeflockte Kartoffelfruchtsaft zentrifugiert wird, wodurch eine überstehende Flüssigkeit gebildet wird,

die überstehende Flüssigkeit einer Mixed-Mode-Adsorption-Chromatographie unterzogen wird, die bei einem pH-Wert kleiner als 11 und einer Temperatur von 5 bis 35°C unter Verwendung eines Adsorbens betrieben wird, das in der Lage ist, Kartoffelprotein zu binden, wodurch das native Kartoffelprotein an das Adsorbens adsorbiert wird, und mindestens ein natives Kartoffelproteinisolat mit einem Elutionsmittel aus dem Adsorbens eluiert wird.

7. Verfahren nach Anspruch 6, bei dem nach dem Eluieren Verbindungen mit hohem Molekulargewicht durch Ansäuren auf einen pH-Wert von 4,2 bis 4,7 ausgefällt werden, und
das ausgefallene Material durch Zentrifugieren in einem Abscheider entfernt wird.

8. Verfahren nach Anspruch 7, bei dem der pH-Wert der überstehenden Flüssigkeit auf einen Wert von 3 bis 4 eingestellt wird, vorzugsweise einen pH-Wert von etwa 3,5.

9. Verfahren nach einem der Ansprüche 6 bis 8, bei dem das native Kartoffelproteinisolat durch Ultrafiltration aufkonzentriert wird, gegebenenfalls vor oder nach der Ausfällung, wobei bei einer solchen Ultrafiltration eine Membran mit einem Molekularschnitt von 100 bis 300 kDa verwendet wird.

10. Verfahren nach einem der Ansprüche 6 bis 9, bei dem das native Kartoffelproteinisolat mit Aktivkohle und/oder Schichtsilikat-Adsorbens behandelt wird, um Glycoalkaloide zu entfernen.

11. Verfahren nach einem der Ansprüche 6 bis 10, bei dem das konzentrierte native Kartoffelproteinisolat auf einen Feuchtigkeitsgehalt von 8 Gew.-% oder weniger, vorzugsweise 6 Gew.-% oder weniger, bevorzugter 5 Gew.-% oder weniger getrocknet wird.

12. Bier, das natives Kartoffelproteinisolat gemäß einem der vorhergehenden Ansprüche umfasst, und vorzugsweise einen Alkoholgehalt von 5 Vol.-% oder weniger aufweist, bevorzugt 2,5 Vol.-% oder weniger.

13. Bier nach Anspruch 12, das einen pH-Wert im Bereich von 2,8 bis 4,5 aufweist, vorzugsweise im Bereich von 4 bis 4,5.

14. Verwendung eines nativen Kartoffelproteinisolats, vorzugsweise eines nativen Kartoffelproteaseinhibitorisolats als schaumstabilisierendes Mittel in Bier.

**Revendications**

1. Procédé de préparation de bière ayant des propriétés de moussage renforcées comprenant l'addition d'un isolat de protéine de pomme de terre native à ladite bière, dans lequel ledit isolat de protéine de pomme de terre native a une teneur en protéine de 90 % ou plus basée sur la matière sèche telle que déterminée à partir du poids total de l'azote dosé par la méthode de Kjeldahl multiplié par 6,25.

2. Procédé selon la revendication 1, dans lequel l'isolat de protéine de pomme de terre native a une teneur en protéine de 92 % ou plus basée sur la matière sèche, de préférence de 95 % ou plus.

3. Procédé selon la revendication 1 ou 2, dans lequel l'isolat de protéine de pomme de terre native comprend un inhibiteur de protéase de pomme de terre native.

4. Procédé selon l'une quelconque des revendications 1 à 3, dans lequel ladite bière a un pourcentage d'alcool de 5 % en volume ou moins, de manière davantage préférée un pourcentage d'alcool de 2,5 % en volume ou moins.

5. Procédé selon l'une quelconque des revendications 1 à 4, dans lequel ledit isolat de protéine de pomme de terre native est ajouté dans une quantité de 0,005 à 0,04 % en poids de matière sèche d'isolat de protéine de pomme de terre native basée sur le poids total de la bière, de préférence dans une quantité de 0,01 et 0,02 % en poids.

6. Procédé selon l'une quelconque des revendications 1 à 5, dans lequel ledit isolat de protéine de pomme de terre native est obtenu par un procédé comprenant les étapes consistant à

✔ soumettre un jus de fruit de pomme de terre à une floculation par un cation de métal divalent à un pH de 7 à 9 ;

✔ centrifuger le jus de fruit de pomme de terre floculé, formant ainsi un surnageant ;

✔ soumettre le surnageant à une chromatographie d'adsorption en mode mixte fonctionnant à un pH inférieur à 11 et à une température de 5 à 35°C en utilisant un adsorbant capable de se lier à la protéine de pomme de terre, adsorbant ainsi la protéine de pomme de terre native sur l'adsorbant i et

✔ éluer au moins un isolat de protéine de pomme de terre native à partir de l'adsorbant avec un éluant:

7.  Procédé selon la revendication 6, dans lequel ladite élution est suivie par

✔ une précipitation des composés de haut poids moléculaire par acidification à une valeur de pH de 4,2 à 4, 7 ; et

✔ une élimination des précipités par centrifugation dans un séparateur.

8.  Procédé selon la revendication 7, dans lequel le pH du surnageant est fixé à une valeur de 3 à 4, de préférence à un pH d'environ 3,5.

9.  Procédé selon l'une quelconque des revendications 6 à 8, dans lequel ledit isolat de protéine de pomme de terre native est concentré par ultrafiltration, facultativement avant ou après ladite précipitation, telle qu'une ultrafiltration utilisant une membrane de limite moléculaire de 100 à 300 kDa.

10. Procédé selon l'une quelconque des revendications 6 à 9, dans lequel ledit isolat de protéine de pomme de terre native est traité avec du charbon actif et/ou un adsorbant silicate en couches pour éliminer les glycoalcaloïdes.

11. Procédé selon l'une quelconque des revendications 6 à 10, dans lequel ledit isolat de protéine de pomme de terre native concentré est séché jusqu'à une teneur en humidité de 8 % en poids ou moins, de préférence 6 % en poids ou moins, de manière davantage préférée 5 % en poids ou moins.

12. Bière comprenant un isolat de protéine de pomme de terre native tel que défini dans l'une quelconque des revendications précédentes, et ayant de préférence un pourcentage d'alcool de 5 % en volume ou moins, de manière davantage préférée de 2,5 % en volume ou moins.

13. Bièvre selon la revendication 12, ayant un pH dans la plage de 2,8 à 4,5, de préférence dans la plage de 4 à 4, 5.

14. Utilisation d'un isolat de protéine de pomme de terre native, de préférence d'un isolat d'inhibiteur de protéase de pomme de terre native, comme agent de stabilisation de mousse dans la bière.

Volume fraction of beer foam
Adding Low mw protein

Legend:
- □ Reference
- ▧ 0,01% LMW
- ▨ 0,02% LMW
- ▤ 0,03% LMW

Fig. 1

Fig. 2A

Fig. 2B

**Volume fraction of beer foam**
**Adding Hyfoama**

Legend:
- reference
- Hyfoama 0,01%
- Hyfoama 0,02%
- Hyfoama 0,03%

Y-axis: Volume Fraction (0,00 – 0,80)
X-axis: Time (minutes) 1–15

Fig. 3

13

Fig. 4A

1)

2)

3)

4)

Fig. 4B

Fig. 4C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0790316 A
- EP 1876228A1 A
- WO 2008069650 A
- WO 2008069651 A
- WO 2008056977 A

**Non-patent literature cited in the description**

- **Bamforth.** *J. Inst. Brew.,* 1985, vol. 91, 370-383
- **Yokoi et al.** *J. Am. Soc. Brew. Chem.,* 1994, vol. 52 (3), 125-126
- **Ronteltap et al.** *Tech. Q. Mater Brew. Assoc. Am.,* 1991, vol. 28, 25-32
- **He et al.** *J. Am. Soc. Brew. Chem.,* 2006, vol. 64, 33-38
- **Pots et al.** *J. Sci. Food. Agric.,* 1999, vol. 79, 1557-1564